# EUROPÄISCHE PATENTANMELDUNG

(11) **EP 3 819 115 A1**
(43) Veröffentlichungstag der Anmeldung: **12.05.2021**
(21) Anmeldenummer: 20206615.5
(22) Anmeldetag: 10.11.2020
(51) Int. Cl.: B32B 5/02, B32B 5/22, D03D 1/00, D03D 15/283, D03D 15/593, B32B 5/12

(54) **DRAHTGEWEBELAGE UND VERFAHREN ZUM HERSTELLEN EINES MEHRLAGIGEN ERZEUGNISSES**

(30) Priorität: 11.11.2019 DE 102019130370
(71) Anmelder: Haver & Boecker OHG, 59302 Oelde (DE)
(72) Erfinder: Fröhlich, Helmut, 59302 Oelde (DE); Butenkemper, Stefan, 48324 Sendenhorst (DE); Meyer, Frank, 49196 Bad Laer (DE)
(74) Vertreter: BSB Patentanwälte Schütte & Engelen Partnerschaft mbB

(57) **Zusammenfassung**

Drahtgewebelage (1) umfassend Kettdrähte (2) und Schussdrähte (3), wobei die Kettdrähte (2) und die Schussdrähte (3) Gewebemaschen (4) bilden und eine Gewebefläche (5) aufspannen. Dabei ist ein Verbindungselement (6) vorgesehen ist, welches ein thermisch verformbares Material (7) umfasst. Das mehrlagige Erzeugnis (100) umfassend eine solche Drahtgewebelage (1) und eine weitere Lage (50), wobei die Drahtgewebelage (1) und die weitere Lage (50) mittels des thermisch verformten Verbindungselements (6) verbunden sind. Bei dem Verfahren zum Herstellen eines solchen mehrlagigen Erzeugnisses (100) werden die Drahtgewebelage (1) und die weitere Lage (50) in einer vorbestimmten Orientierung aufeinandergelegt. Durch das thermische Verformen des thermisch verformbaren Materials (7) des Verbindungselements (6) werden die Drahtgewebelage (1) und die weitere Lage (50) miteinander verbunden werden.

## Beschreibung

Die vorliegende Erfindung betrifft eine Drahtgewebelage umfassend Kettdrähte und Schussdrähte, wobei die Kettdrähte und die Schussdrähte Gewebemaschen bilden und eine Gewebefläche aufspannen. Die vorliegende Erfindung betrifft zudem ein mehrlagiges Gewebe umfassend wenigstens eine solche Drahtgewebelage und wenigstens eine weitere Gewebelage. Die vorliegende Erfindung betrifft weiterhin ein Verfahren zum Herstellen eines wenigstens abschnittsweise mehrlagigen Erzeugnisses, insbesondere eines wenigstens abschnittsweise mehrlagigen Gewebes umfassend wenigstens eine solche Drahtgewebelage und wenigstens eine weitere Lage, insbesondere wenigstens eine weitere Gewebelage, wobei die Drahtgewebelage und die weitere Lage bzw. Gewebelage in einer vorbestimmten Orientierung aufeinandergelegt werden.

In verschieden und teils sehr unterschiedlichen Bereichen wird Drahtgewebe in verschiedensten Ausgestaltungen eingesetzt. So wird beispielsweise in der Architektur, beim Absieben und in der Filtration eingesetzt.

In der Filtration werden zum Beispiel je nach Anwendung mehrlagige Gewebe verwendet, wobei hier eine relativ engmaschige Filterlage aus relativ feinen Drähten vorgesehen ist, welche für sich viel zu instabil und empfindlich wären. Daher wird oft eine weitere Gewebealge als Stützlage aus einem in der Regel weitmaschigen Gewebe aus stabileren Drähten verwendet, um die Filterlage abzustützen und zu schützen. Solche mehrlagigen Filtergewebe sind je nach Anwendung hoch beansprucht. Insbesondere, wenn die Filtergewebe als umlaufende bzw. rotierende Filterbänder verwendet werden, können die Stützlage und die Filterlage gegeneinander verrutschen und/oder sich voneinander ablösen bzw. abheben. Dies gilt es für eine optimale Haltbarkeit des Gewebes und eine zuverlässige Filtration zu vermeiden. Dazu müssen die beiden Lagen miteinander verbunden werden. Die ist in der Regel recht aufwendig und somit nicht wirtschaftlich und/oder nicht zuverlässig.

Eine zuverlässige Verbindung der Lagen eines mehrlagigen Gewebes ist in vielen Einsatzbereichen vorteilhaft und gewünscht.

Es ist deshalb die Aufgabe der vorliegenden Erfindung, eine Möglichkeit zur Verfügung zu stellen, Gewebelagen einfach und effektiv miteinander zu verbinden.

Diese Aufgabe wird gelöst durch ein eine Drahtgewebelage mit den Merkmalen des Anspruchs 1, durch ein mehrlagiges Erzeugnis mit den Merkmalen des Anspruchs 9 und durch ein Verfahren zum Herstellen eines mehrlagigen Erzeugnisses mit den Merkmalen des Anspruchs 11. Bevorzugte Weiterbildungen sind Gegenstand der Unteransprüche. Weitere Vorteile und Merkmale der vorliegenden Erfindung ergeben sich aus der allgemeinen Beschreibung und der Beschreibung der Ausführungsbeispiele.

Die erfindungsgemäße Drahtgewebelage umfasst Kettdrähte und Schussdrähte, wobei die Kettdrähte und die Schussdrähte Gewebemaschen bilden und eine Gewebefläche aufspannen. Dabei ist wenigstens ein Verbindungselement vorgesehen, welches wenigstens abschnittsweise wenigstens ein thermisch verformbares Material umfasst und/oder wenigstens abschnittsweise als thermisch verformbares Material ausgebildet ist.

Auch wenn Erfindung anhand einer Drahtgewebelage aus Kettdrähten und Schussdrähten beschrieben wird, können analog auch andere Materialien, beispielsweise Kunststofffäden, als Schuss und Kette verwendet werden. Wesentlich ist insbesondere, dass sowohl bei der Verwendung von Kettdrähten und Schussdrähten als auch bei der Verwendung von anderen Materialien die Kettdrähte bzw. Schussfäden und Schussdrähte bzw. Schussfäden thermostabil bzw. thermostabiler als dass wenigstens ein Verbindungselement ausgebildet sind bzw. einen höheren Schmelzpunkt aufweisen.

Die erfindungsgemäße Drahtgewebelage bietet viele Vorteile. Ein erheblicher Vorteil ist, dass mittels der erfindungsgemäßen Drahtgewebelage einfach und zuverlässig ein mehrlagiges Gewebe bzw. ein mehrlagiges Erzeugnis hergestellt werden kann. Dazu wird auf die Drahtgewebelage mit dem wenigstens einen Verbindungselement wenigstes eine weitere Gewebelage und/oder ein anderes Material aufgelegt und/oder die erfindungsgemäße Drahtgewebelage wird auf wenigstens eine weitere Gewebelage und/oder ein anderes Material aufgelegt. Durch das Erwärmen bzw. Erhitzen des thermisch verformbaren Verbindungselements können so mehrere Gewebelagen aneinander befestigt bzw. miteinander verbunden werden.

Statt einer weiteren Gewebelage wie beispielsweise einem Drahtgewebe oder einem anderen Gewebe oder einem Vlies oder dergleichen kann die erfindungsgemäße Drahtgewebelage insbesondere auch mit anderen Lagen beispielsweise aus Kunststoff, Glas, Holz, Metall oder dergleichen mittels des thermisch verformbaren Verbindungselements verbunden werden. Vorzugsweise können so dann auch andere Laminatprodukte bzw. mehrlagige Erzeugnisse hergestellt werden, welche eine wenigstens teilweise bzw. abschnittweise Verbindung zwischen zwei Lagen aufweisen.

Die erfindungsgemäße Drahtgewebelage kann mittels des Verbindungselements bzw. der Verbindungselemente aber auch mit sich selbst verbunden werden. So kann beispielsweise ein Ring aus einem Gewebe gelegt und fixiert werden. Auch ein Gewebeschlauch kann so einfach und zuverlässig hergestellt werden.

Auch der Einsatz in der Architektur bietet hier Vorteile. Die Verbindungselemente könnten dann zum Beispiel eingefärbt werden, um eine gewünschte Optik zu erzielen. In die Zwischenräume könnten je nach Ausgestaltung auch zierende Elemente eingesetzt werden.

Allgemein findet die erfindungsgemäße Drahtgewebelage insbesondere auch Anwendung in der Filtration, Absiebung.

Bevorzugt ist das wenigstens eine Verbindungselement wie ein Kettdraht und/oder ein Schussdraht in die Gewebefläche integriert. Dann ist das Verbindungselement fadenartig oder dergleichen ausgebildet. Dabei wird das wenigstens eine Verbindungselement vorzugsweise bei dem Webprozess direkt mit eingewebt. So kann auf einfache Art und Weise ein Verbindungselement in die Gewebefläche integriert werden, sodass einerseits das Verbindungselement fest mit der Gewebefläche verbunden ist und andererseits in geeigneter Art und Weise eine Verbindung zu einer weiteren Gewebelage für ein mehr lagiges Gewebe hergestellt werden kann.

Besonders bevorzugt ersetzt wenigstens ein Verbindungselement wenigstens einen Kettdraht und/oder wenigstens einen Schussdraht. Dabei können je nach Ausgestaltung auch mehrere Verbindungselemente als Ersatz für einen oder auch mehrere Schussdrähte und/oder wenigstens einen oder auch mehrere Kettdrähte vorgesehen werden. Wenn die Drahtgewebelage mit dem Verbindungselement zur Herstellung eines mehrlagigen Gewebes verwendet werden soll, kann beispielsweise je nach Anforderung an die Verbindungsfestigkeit mehr als ein Verbindungselement pro Verbindungsstelle eingewebt werden.

In zweckmäßigen Weiterbildungen umfasst das Verbindungselement wenigstens eine formstabile Seele, um welche vorzugsweise das thermisch verformbare Material außen herum angeordnet ist. Die formstabile Seele ist dann vorzugsweise auch thermostabil, sodass diese auch nach einem nach thermischer Beanspruchung noch eine wenigstens eine gewisse Stabilität aufweist.

Vorzugsweise ist das Verbindungselement wenigstens abschnittsweise im Wesentlichen elastisch bzw. komprimierbar ausgebildet. Dabei ist insbesondere das thermisch verformbare Material des Verbindungselements elastisch bzw. komprimierbar ausgebildet. Dabei ist insbesondere bevorzugt, dass sich das thermisch verformbare Material komprimieren lässt und wieder in seine ursprüngliche Form zurückkehrt, sobald der zum Komprimieren verwendete Druck weggenommen wird.

Bevorzugt umfasst das thermisch verformbare Material Polyurethan und/oder ein ähnliches Material mit gleichen oder ähnlichen Eigenschaften. Dabei ist insbesondere bevorzugt, dass das verformbare Material aus Polyurethan besteht bzw. durch Polyurethan zur Verfügung gestellt wird.

Besonders bevorzugt ist die Gewebefläche kalandert, wobei das Verbindungselement eine größere Stärke als die Stärke der Kettdrähte und/oder der Schussdrähte und/oder der kalanderten Gewebefläche aufweist. Je nach Ausgestaltung kann ein in die Gewebefläche eingewebtes Verbindungselement eine derartige Stärke aufweisen, dass es über die Kettenschussdrähte übersteht. Je nach Ausgestaltung ist dies jedoch auch nicht so.

Um dennoch eine gute Verbindung zu einer weiteren Gewebelage erreichen zu können, ist es sinnvoll, dass es Verbindungselement über die Kett- und/oder Schussdrähte wenigstens abschnittsweise übersteht. Dies kann beispielsweise auch erst nach dem Kalandern der Gewebefläche erreicht oder verstärkt werden. Dabei wird beim Kalandern auch das Verbindungselement komprimiert, wobei sich das Verbindungselement nach dem Kalandern wieder ausdehnt, sodass es über die Kett- und/oder Schussdrähte übersteht. Dann kann beispielsweise eine weitere Gewebelage auf die erfindungsgemäße Drahtgewebelage aufgelegt und erhitzt werden. Dann schmilzt bzw. verformt sich das thermisch verformbare Material und legt sich um beide Lagen herum.

Das erfindungsgemäße mehrlagige Erzeugnis kann insbesondere als mehrlagiges Gewebe ausgebildet sein und umfasst wenigstens eine Drahtgewebelage, wie sie zuvor beschrieben wurde und wenigstens eine weitere Lage bzw. Gewebelage. Dabei werden die Drahtgewebelage und die wenigstens eine weitere Lage bzw. Gewebelage mittels des thermisch verformbaren Verbindungselements verbunden.

Dabei kann die weitere Gewebelage vorzugsweise auch als Drahtgewebe ausgebildet sein oder ein Drahtgewebe umfassen. Es kann aber auch eine Gewebelage aus einem anderen Material vorgesehen sein. Es können allgemein auch mehrlagige Erzeugnisse aus wenigstens einer erfindungsgemäßen Drahtgewebelage und wenigstens einer weiteren Lage hergestellt werden. Dabei kann die weitere Lage insbesondere Glas, Metall, Kunststoff, Holz oder auch andere Materialien umfassen. So ist es bevorzugt möglich als weitere Lage beispielsweise eine Kunststofffolie, eine Plexiglasscheibe bzw. eine Plexiglasplatte, eine Metallplatte oder je andere geeignete Lage zu verwenden. Dabei könne die weiteren Lagen bzw. Gewebelagen je nach Anwendung unterschiedliche Eigenschaften aufweisen.

Es ist bevorzugt auch möglich, mittels der erfindungsgemäßen Drahtgewebe eine wenigstens abschnittsweise mehrlagigen Gewebefläche zu erstellen. Dann kann die weitere Gewebelage auch durch die erfindungsgemäße Gewebelage selbst bereitgestellt werden, beispielsweise bei einem Gewebering oder einem Gewebeschlauch.

Insbesondere ist bevorzugt, dass ein mehrlagiges Siebgewebe und/oder Filtergewebe gebildet wird, wobei eine Sieblage bzw. Filterlage und eine Stützlage vorgesehen sind. Die Stützlage bzw. das Stützgewebe kann dann vorzugsweise relative großmaschig vorgesehen sein und das Verbindungselement bzw. die Verbindungselemente umfassen, also als erfindungsgemäße Drahtgewebelage ausgebildet sein. Das Filtergewebe bzw. die Filterlage oder das Siebgewebe bzw. die Sieblage stellen dann die weitere Gewebelage zur Verfügung. Je nach Ausgestaltung kann es aber auch anders herum sein, sodass die Filterlage bzw. die Sieblage das Verbindungselement bzw. die Verbindungselemente umfasst. Es können aber in bevorzugten Ausgestaltungen auch beide Lagen mit Verbindungselementen ausgestattet sein. Grundsätzlich ist in allen Ausgestaltungen bevorzugt, dass die weitere Gewebelage durch eine erfindungsgemäße Drahtgewebelage bereitgestellt wird.

Das erfindungsgemäße mehrlagige Gewebe bietet viele Vorteile. Ein erheblicher Vorteil ist, dass ein zuverlässig verbundenes Gewebe bzw. mehrlagiges Gewebe aus wenigstens zwei Gewebelagen bereitgestellt wird, wobei der Verbindungsvorgang bzw. das Verbinden der beiden Gewebelagen besonders einfach und zuverlässig realisiert werden kann. Dazu werden einfach die Drahtgewebelage und die weitere Gewebelage aufeinandergelegt und mittels Hitze verbunden. Durch Zugabe von Hitze verformt bzw. schmilzt das thermisch verformbare Material des Verbindungselements und legt sich um beide Gewebelagen bzw. in die Maschen beider Gewebelagen hinein, sodass die beiden Gewebelagen sicher verbunden sind.

Bevorzugt umfasst auch die weitere Gewebelage Kettdrähte und Schussdrähte bzw. Kettfäden und Schussfäden, wobei die Kettdrähte und Schussdrähte sowohl der Drahtgewebelage als auch der weiteren Gewebelage vorzugsweise wenigstens abschnittsweise von dem thermisch verformten Verbindungselement umschlossen sind.

Das erfindungsgemäße Verfahren eignet sich zum Herstellen eines wenigstens abschnittsweise mehrlagigen Erzeugnisses, insbesondere eines wenigstens abschnittsweise mehrlagigen Gewebes umfassend wenigstens eine Drahtgewebelage, wie sie zuvor beschrieben wurde und wenigstens eine weitere Lage, insbesondere wenigstens eine weitere Gewebelage, wobei die Drahtgewebelage und die weitere Lage in einer vorbestimmten Orientierung aufeinandergelegt werden. Erfindungsgemäß werden durch das wenigstens abschnittsweise und wenigstens teilweise thermische Verformen des thermisch verformbaren Materials des Verbindungselements die Drahtgewebelage und die weitere Lage miteinander verbunden.

Die weitere Lage bzw. Gewebelage kann vorzugsweise durch die erfindungsgemäße Drahtgewebelage selbst bereitgestellt werden.

Dabei können insbesondere Temperaturen zwischen 50 und 400°C, vorzugsweise zwischen 100 und 300°C und besonders bevorzugt zwischen 150 und 280°C eingesetzt werden, um das thermisch verformbare Material des Verbindungselements zu verformen bzw. zu schmelzen.

Durch das Verformen bzw. Schmelzen des Verbindungselements umschließt bzw. verklebt das thermisch verformbare Material beide Gewebelage miteinander.

Auch das erfindungsgemäße Verfahren bietet die Vorteile, wie sie zuvor schon zu dem mehrlagigen Erzeugnis bzw. mehrlagigen Gewebe ausgeführt wurden.

Bevorzugt werden das Drahtgewebe und die weitere Gewebelage wenigstens zeitweise und wenigstens abschnittsweise beim Verbinden gepresst bzw. mit Druck beaufschlagt. Durch das Erhitzen des thermisch verformbaren Materials des Verbindungselements und das gleichzeitige und/oder nachfolgende Zugeben von Druck kann ein besonders effektives Verbinden der beiden Gewebelage erreicht werden. Durch das Pressen des thermisch verformten bzw. erhitzten Materials wird dieses besonders gut in die beiden Gewebelagen eingedrückt, sodass das Material die Kett- und/oder Schussdrähte beider Gewebelage vorzugsweise wenigstens abschnittsweise und insbesondere vollständig umschließt, sodass eine gute Verbindung zwischen den beiden Gewebelage hergestellt wird.

Weitere Vorteile und Merkmale der vorliegenden Erfindung ergeben sich aus den Ausführungsbeispielen, welche nachfolgend mit Bezug auf die beiliegenden Figuren erläutert werden.

In den Figuren zeigen:
- Fig. 1: eine rein schematische Darstellung eines Ausführungsbeispiels einer erfindungsgemäßen Drahtgewebelage in einer Draufsicht;
- Fig. 2: eine rein schematische Darstellung eines Ausführungsbeispiels eines Verbindungselements für eine erfindungsgemäße Drahtgewebelage in einer Schnittansicht;
- Fig. 3: eine rein schematische Darstellung auf die Schussdrähte und die Verbindungselemente eines Ausführungsbeispiels einer erfindungsgemäßen Drahtgewebelage in einer Schnittansicht;
- Fig. 4: eine rein schematische Darstellung der Herstellung eines Ausführungsbeispiels eines erfindungsgemäßen mehrlagigen Gewebes in einer Draufsicht;
- Fig. 5: eine rein schematische Darstellung der Herstellung eines Ausführungsbeispiels eines erfindungsgemäßen mehrlagigen Gewebes in einer Draufsicht;
- Fig. 6: eine rein schematische Darstellung eines Ausführungsbeispiels eines erfindungsgemäßen mehrlagigen Gewebes in einer Draufsicht; und
- Fig. 7: eine rein schematische Darstellung eines weiteren Ausführungsbeispiels eines erfindungsgemäßen mehrlagigen Gewebes in einer Draufsicht.

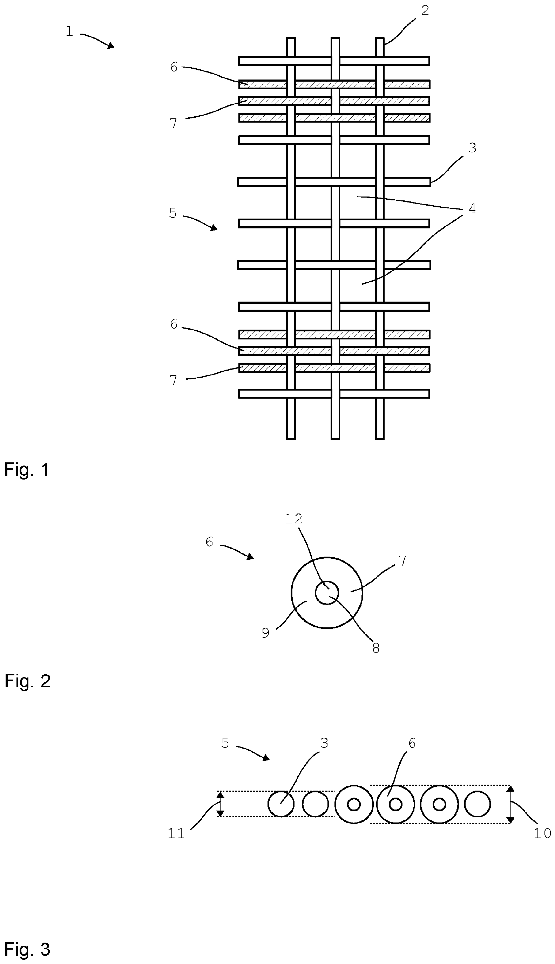

In Figur 1 ist rein schematisch eine erfindungsgemäße Drahtgewebelage 1 dargestellt, welche eine Mehrzahl von miteinander verbogenen Kettdrähten 2 und Schussdrähten 3 aufweist, welche Gewebemaschen 4 bilden und so eine Gewebefläche 5 aufspannen.

Dabei sind die Kettdrähte 2 und die Schussdrähte 3 in dem hier gezeigten Ausführungsbeispiel als Drähte ausgeführt bzw. bestehen aus Metall. In anderen Ausführungsformen kann statt eines Drahtes auch ein Kettfaden bzw. ein Kettdraht aus einem anderen auch nicht metallischen Material verwendet werden.

Erfindungsgemäß umfasst die Drahtgewebelage 1 auch wenigstens ein Verbindungselement 6, welches wenigstens abschnittsweise wenigstens ein thermisch verformbares Material umfasst. Dabei sind in dem gezeigten Ausführungsbeispiel zwei Gruppen von Verbindungselementen je drei Verbindungselementen 6 dargestellt, welche wie Schussdrähte 3 in die Gewebelage 1 eingebracht sind. Je nach Ausgestaltung kann auch nur ein Verbindungselement 6 bzw. können auch mehr als die dargestellten Verbindungselemente 6 vorgesehen werden.

Durch das thermisch verformbare Material 7 der Verbindungselemente 6 wird es möglich, dass andere Gewebelagen 50, allgemein Lagen 50 aus anderen Materialien Kunststoff, Holz, Metall, Glas oder dergleichen und/oder zusätzliche Gewebelagen 50 auf die Drahtgewebelage 1 aufgelegt werden können und mittels der thermischen Verformung der Verbindungselemente 6 zu einem mehrlagigen Erzeugnis 100 bzw. einem mehrlagigen Gewebe 100 verbunden werden. Dabei verformt sich das thermisch verformbare Material 7 der Verbindungselemente 6 beim Erhitzen, sodass eine Art Verklebung zwischen der Drahtgewebelage 1 und der weiteren Gewebelage 50 erfolgen kann.

Mit der erfindungsgemäßen Drahtgewebelage 1 kann aber auch beispielsweise ein Ringschluss von der Drahtgewebelage selber erreicht werden. So kann beispielsweise ein umlaufendes Siebband dadurch hergestellt werden, dass die Drahtgewebelage 1 als Ring zusammen gelegt wird, wobei in den überlappenden Enden wenigstens an einer Stelle wenigstens ein Verbindungselement 6 vorgesehen ist, welches durch thermische Verformung den Ringschluss der Drahtgewebelage 1 permanent fixiert. Auch eine Schlauchbildung ist so möglich.

Auch im Architekturbereich kann eine solche Drahtgewebelage 1 vorteilhaft verwendet werden. Beispielsweise kann auch durch die unterschiedliche Farbgebung von Verbindungselementen 6 ein Highlight gesetzt werden, was designtechnisch von Vorteil sein kann.

Die Verbindungselemente 6 sind in dem hier gezeigten Ausführungsbeispiel in die Drahtgewebelage 1 eingewebt bzw. in diese integriert. In anderen Ausgestaltungen können die Verbindungselemente 6 jedoch auch anders mit der Drahtgewebelage 1 verbunden sein. Beispielsweise können die Verbindungselemente 6 auch mit nicht dargestellten Fixierelementen an den Kettdrähten 2 und/oder den Schussdrähten 3 fixiert werden.

Hier ist jedoch vorgesehen, dass die Verbindungselemente 6 wie ein Schussdraht 3 in die Gewebefläche 5 integriert sind. In anderen Ausgestaltungen können auch Kettdrähte 2 durch Verbindungselemente 6 ersetzt werden und/oder die Verbindungselemente 6 wie Kettdrähte 2 in die Gewebefläche 5 bzw. die Gewebelage 1 eingebracht werden.

Je nach Ausgestaltung können die Verbindungselemente 6 auch Kettdrähte 2 und/oder Schussdrähte 3 ersetzen. Dies ist in die gezeigten Ausführungsbeispiel auch der Fall. Dabei ist insbesondere, wenn die Verbindungselemente 6 in die Gewebelage 1 integriert sind und wie Kettdrähte 2 bzw. Schussdrähte 3 eingewirkt sind von Vorteil, wenn die Verbindungselemente 6 wenigstes eine formstabile Seele 8 umfassen. Diese formstabile Seele 8 ist insbesondere thermisch stabil, sodass bei dem Verbindungsprozess von der Drahtgewebelage 1 mit einer weiteren Gewebelage 50 oder mit sich selbst weiterhin eine gewünschte Stabilität der Gewebefläche 5 bzw. der Drahtgewebelage 1 erhalten bleibt.

In Figur 2 ist dargestellt, wie ein Verbindungselement 6 mit einer formstabilen Seele 8 aufgebaut sein kann. Dabei ist in dem gezeigten Ausführungsbeispiel ein dünner Draht 12 als formstabile Seele 8 vorgesehen, welcher von einem thermisch verformbaren Material 7, hier gezeigten Ausführungsbeispiel Polyurethan 9 ummantelt ist.

In Figur 3 ist dargestellt, dass die Verbindungselemente 6 eine größere Stärke 10 als die Stärke 11 der Kettdrähte 2 und/oder Schussdrähte 3 aufweisen kann. Je nach Ausgestaltung kann die größere Stärke 10 auch erst in der kalanderten Gewebefläche 5 vorliegen. Hierdurch wird es möglich, dass zumindest nach dem Kalandern der Gewebefläche 5 die Verbindungselemente 6 über die Schussdrähte 3 überstehen, sodass das thermisch verformbare Material 7 bei einem Verbindungsprozess mit einer weiteren Gewebelage 50 oder mit der Drahtgewebelage 1 selbst beim Schmelzen in die Maschen der jeweiligen Lage einfließen kann, um die beiden Lagen zu verbinden.

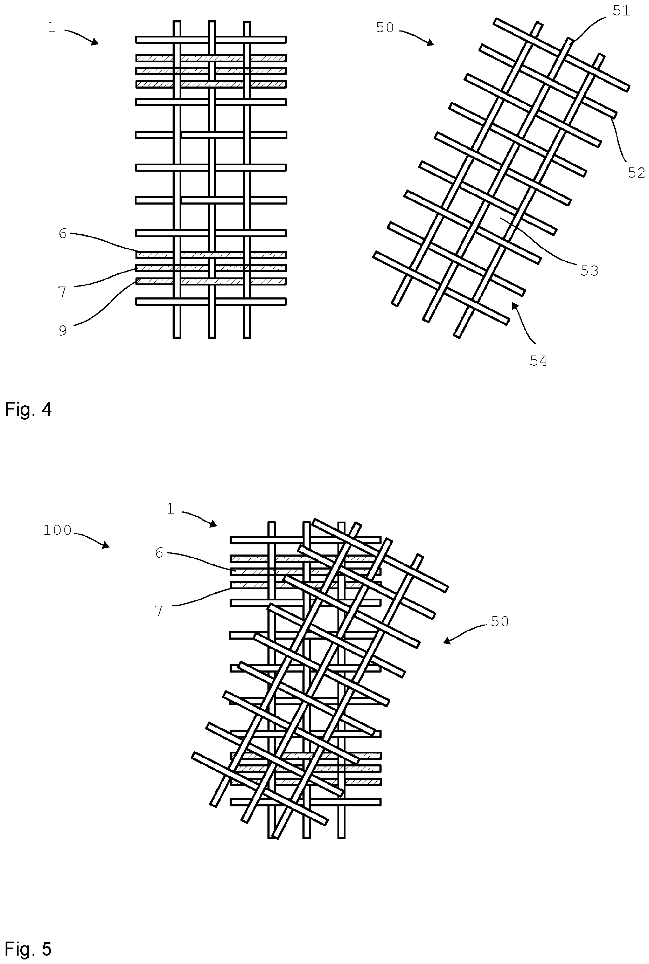

In den Figuren 4 bis 6 ist das Verfahren zum Herstellen eines mehrlagigen Erzeugnisses und in dem gezeigten Ausführungsbeispiel zum Herstellen eines mehrlagigen Gewebes 100 durch das Verbinden einer Drahtgewebelage 1 mit einer weiteren Gewebelage 50 in einem Ausführungsbeispiel rein schematisch dargestellt.

Dabei liegt eine Drahtgewebelage 1 vor, wie sie zuvor beschrieben wurde. Auf diese Drahtgewebelage 1 wird eine weitere Gewebelage 50 in einer gewünschten Orientierung aufgelegt. Anschließend wird je nach Ausgestaltung und Anwendungsfall entweder rein thermisch oder aber zusätzlich oder auch alternierend mit Druck das thermisch verformbare Material 7 der Verbindungselemente 6 erhitzt. So wird das thermisch verformbare Material verformt bzw. schmilzt, wodurch eine Verbindung zwischen der Drahtgewebelage 1 und der weiteren Gewebelage 50 erreicht wird.

Dabei weist in dem hier gezeigten Ausführungsbeispiel auch die weitere Gewebelage 50, welche hier auch als Drahtgewebe ausgeführt ist, Kettdrähte 51 und Schussdrähte 52 auf, welche Gewebemaschen 53 bilden und eine Gewebefläche 54 aufspannen. Durch das thermische Verformen des thermisch verformbaren Materials 7 der Verbindungselemente 6 umschließt das Material insbesondere bei der Verwendung von Druck auch die Kettdrähte 2 und Schussdrähte 3 der weiteren Gewebelage 50, wodurch beim Aushärten des thermisch verformbaren Materials eine sichere und dauerhafte und zuverlässige Verbindung der Drahtgewebelage 1 mit der weiteren Gewebelage sich erreicht wird.

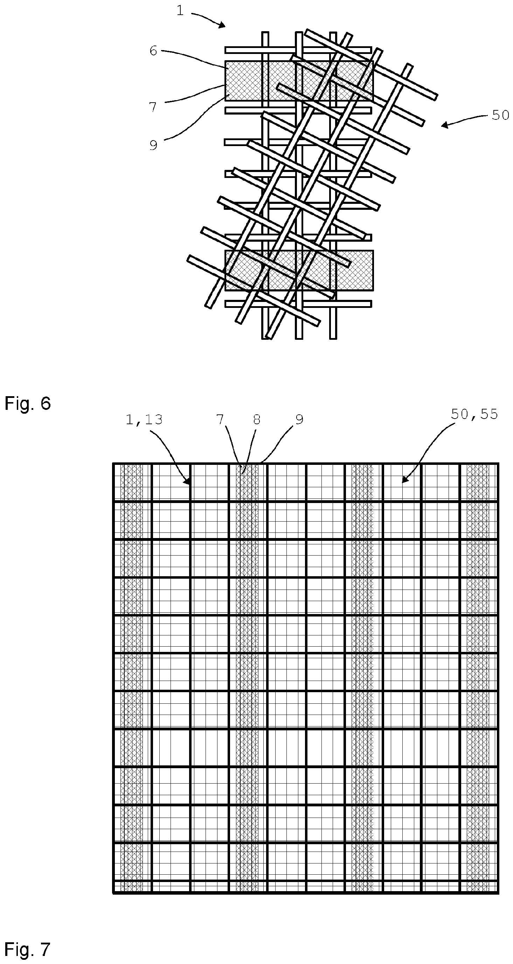

In Figur 7 ist rein schematisch ein weiteres Ausführungsbeispiel eines mehrlagigen Gewebes 100 rein schematisch dargestellt. Dabei ist hier die Drahtgewebelage 1 als Stützgewebe 13 ausgebildet.

Dabei weist die hier gezeigte Drahtgewebelage 1 mehrere Reihen von Verbindungselementen 6 in hier gleichmäßigen Abständen auf, welche hier eine zweite Gewebelage 50 fixieren. Die zweite Gewebelage 50 ist dabei als Siebgewebe 55 ausgebildet.

### Bezugszeichenliste:

- 1: Drahtgewebelage
- 2: Kettdraht
- 3: Schussdraht
- 4: Gewebemasche
- 5: Gewebefläche
- 6: Verbindungselement
- 7: thermisch verformbares Material
- 8: Seele
- 9: Polyurethan
- 10: Stärke
- 11: Stärke
- 12: Draht
- 13: Stützgewebe
- 50: Lage/Gewebelage
- 51: Kettdraht
- 52: Schussdraht
- 53: Gewebemasche
- 54: Gewebefläche
- 55: Siebgewebe
- 100: mehrlagiges Erzeugnis/mehrlagiges Gewebe

## Patentansprüche

1. Drahtgewebelage (1) umfassend Kettdrähte (2) und Schussdrähte (3), wobei die Kettdrähte (2) und die Schussdrähte (3) Gewebemaschen (4) bilden und eine Gewebefläche (5) aufspannen,
**dadurch gekennzeichnet,**
**dass** wenigstens ein Verbindungselement (6) vorgesehen ist, welches wenigstens abschnittsweise wenigstens ein thermisch verformbares Material (7) umfasst.

2. Drahtgewebelage (1) nach Anspruch 1, wobei wenigstens ein Verbindungselement (6) wie ein Kettdraht (2) und/oder ein Schussdraht (3) in die Gewebefläche (5) integriert ist.

3. Drahtgewebelage (1) nach einem der vorhergehenden Ansprüche, wobei wenigstens ein Verbindungselement (6) wenigstens einen Kettdraht (2) und/oder wenigstens einen Schussdraht (3) ersetzt.

4. Drahtgewebelage (1) nach einem der vorhergehenden Ansprüche, wobei das Verbindungselement (6) wenigstens eine formstabile Seele (8) umfasst.

5. Drahtgewebelage (1) nach einem der vorhergehenden Ansprüche, wobei das Verbindungselement (6) wenigstens abschnittsweise im Wesentlichen elastisch ausgebildet ist.

6. Drahtgewebelage (1) nach einem der vorhergehenden Ansprüche, wobei das thermisch verformbare Material (7) Polyurethan (9) umfasst.

7. Drahtgewebelage (1) nach einem der vorhergehenden Ansprüche, wobei das Verbindungselement (6) eine größere Stärke (10) als die Stärke (11) der Gewebefläche (5) aufweist.

8. Drahtgewebelage (1) nach einem der vorhergehenden Ansprüche, wobei die Gewebefläche kalandert ist, wobei das Verbindungselement (6) eine größere Stärke (10) als die Stärke (11) der Kettdrähte (2) und/oder der Schussdrähte (3) und/oder kalanderten Gewebefläche (5) aufweist.

9. Mehrlagiges Erzeugnis (100), insbesondere mehrlagiges Gewebe (100), umfassend wenigstens eine Drahtgewebelage (1) nach einem der vorhergehenden Ansprüche und wenigstens eine weitere Lage (50), insbesondere wenigstens eine weitere Gewebelage (50),
**dadurch gekennzeichnet,**
**dass** die Drahtgewebelage (1) und die wenigstens eine weitere Lage (50) mittels des thermisch verformten Verbindungselements (6) verbunden sind.

10. Mehrlagiges Erzeugnis (100), insbesondere mehrlagiges Gewebe (100) nach dem vorhergehenden Anspruch, wobei die weitere Lage (50) Kettdrähte (51) und Schussdrähte (52) umfasst, wobei Kettdrähte (2, 52) und Schussdrähte (3, 53) sowohl der Drahtgewebelage (1) als auch der weiteren Lage (50) wenigstens abschnittsweise von dem thermisch verformten Verbindungselement (6) umschlossen sind.

11. Verfahren zum Herstellen eines wenigstens abschnittsweise mehrlagigen Erzeugnisses, insbesondere eines wenigstens abschnittsweise mehrlagigen Gewebes (100) umfassend wenigstens eine Drahtgewebelage (1) nach einem der vorhergehenden Ansprüche und wenigstens eine weitere Lage (50), insbesondere wenigstens eine weitere Gewebelage (50), wobei die Drahtgewebelage (1) und die weitere Lage (50) in einer vorbestimmten Orientierung aufeinandergelegt werden,
**dadurch gekennzeichnet,**
**dass** durch das wenigstens abschnittsweise und wenigstens teilweise thermische Verformen des thermisch verformbaren Materials (7) des Verbindungselements (6) die Drahtgewebelage (1) und die weitere Lage (50) miteinander verbunden werden.

12. Verfahren nach dem vorhergehenden Anspruch, wobei das Drahtgewebe (1) und die weitere Lage (50) wenigstens zeitweise und wenigstens abschnittsweise beim Verbinden gepresst werden.

13. Verfahren nach dem vorhergehenden Anspruch, wobei das Drahtgewebe (1) und die weitere Lage (50) wenigstens zeitweise und wenigstens abschnittsweise gepresst und beheizt werden.
